# EUROPEAN PATENT APPLICATION

(11) **EP 3 184 343 A1**
(43) Date of publication of application: **28.06.2017**
(21) Application number: 16206269.9
(22) Date of filing: 22.12.2016
(51) Int. Cl.: B60K 15/04

(54) **VEHICLE WITH FUEL FILLER PORT AND ADDITIONAL FLUID FILLER PORT**

(30) Priority: 24.12.2015 JP 2015251622
(71) Applicant: Mitsubishi Jidosha Kogyo Kabushiki Kaisha, Tokyo 108-8410 (JP); Mitsubishi Jidosha Engineering Kabushiki Kaisha, Okazaki-shi, Aichi (JP)
(72) Inventor: KUNII, Kenichi, Okazaki-shi, Aichi (JP); TASAKI, Takeshi, Tokyo 108-8410 (JP)
(74) Representative: Vossius & Partner Patentanwälte Rechtsanwälte mbB

(57) **Abstract**

A vehicle (1) includes a first port (12) from which fuel is supplied to the vehicle (1), a second port (11) from which fluid other than the fuel is supplied to the vehicle (1), and a vehicle body (3) on which the first port (12) and the second port (11) are provided. With respect to a vertical direction of the vehicle (1), an upper edge portion of the first port (12) is disposed above a lower edge portion of the second port (11).

## Description

### TECHNICAL FIELD

The present invention relates to a vehicle having a fuel filler port and an additional fluid filler port.

### BACKGROUND ART

A selective catalytic reduction system has been developed as an exhaust gas purifying apparatus for lowering the concentration of nitrogen oxides (NOx) contained in exhaust gas from a diesel engine. The selective catalytic reduction system includes an oxidation catalyst for oxidizing nitric monoxide (NO), hydrocarbon (HC) and the like, a selective reduction catalyst provided on downstream of the oxidation catalyst to decompose the NOx into nitrogen and water through chemical reaction between NOx and ammonia produced from aqueous urea solution, and an aqueous urea solution adding unit from which the aqueous urea solution is added to the selective reduction catalyst as reductant.

A vehicle having such an exhaust gas purifying apparatus includes an aqueous urea solution tank configured to store aqueous urea solution for use in the exhaust gas purifying apparatus. Like diesel fuel, the aqueous urea solution is consumed in accordance with running of the vehicle, and therefore it needs to be supplied regularly. The aqueous urea solution is supplied by a driver, a car technician, a staff in a gas station, or the like. It is inconvenient if a fluid filler port for supplying aqueous urea solution is located at a distant position from a fuel filler port for supplying fuel. Therefore, the fluid filler port is sometimes provided next to the fuel filler port (see, e.g., JP2014-118004A).

By providing the fluid filler port next to the fuel filler port, it is convenient in that the location of the fluid filler port can be identified easily and in that the working efficiency is improved. The fuel filler port is typically configured to be fitted to an opening portion that is formed in a steel plate forming the vehicle body. When providing the fluid filler port, an opening portion to which the fluid filler port is fitted is formed next to but at a certain distance from the opening portion to which the fuel filler port is fitted, so as not to to lower the strength of the vehicle body. That is, a certain distance has to be provided between the fuel filler port and the fluid filler port. These filler ports are typically disposed at a position recessed from an outer plate of the vehicle body, and are covered with a lid except during supplying operations. With this configuration, increase in the distance between the fuel filler port and the fluid filler port impedes downsizing of the vehicle, and requires a larger lid to cover the opening portions, particularly longer in the front-rear direction of the vehicle body, thereby deteriorating appearance.

### SUMMARY OF THE INVENTION

An object of the present invention is to provide a vehicle having a fuel filler port and an additional fluid filler port, with improved appearance and without impeding downsizing of the vehicle.

According to an aspect of the present invention, a vehicle includes a first port from which fuel is supplied to the vehicle, a second port from which fluid other than the fuel is supplied to the vehicle, and a vehicle body on which the first port and the second port are provided. With respect to a vertical direction of the vehicle, an upper edge portion of the first port is disposed above a lower edge portion of the second port. The upper edge portion of the first port is disposed below an upper edge portion of the second port.

Other aspects and advantages of the present invention will be apparent from the following description, the drawings and the claims.

### BRIEF DESCRIPTION OF THE DRAWINGS

Fig. 1A is a bottom view of a vehicle according to an embodiment of the present invention;
Fig. 1B is a schematic view of a portion of the vehicle including a fluid filler port and a fuel filler port;
Fig. 2 is a schematic view illustrating a connection between an aqueous urea solution tank and the fluid filler port and a connection between a fuel tank and the fuel filler port according to an embodiment of the present invention;
Figs. 3A to 3D are schematic views illustrating examples of a layout of a fluid filler port and a fuel filler port on a vehicle body;
Fig. 4 is a schematic view illustrating a layout and a configuration of a fluid filler port and a fuel filler port according to a first embodiment of the present invention; and
Fig. 5 is a schematic view illustrating a layout and a configuration of a fluid filler port and a fuel filler port according to a second embodiment of the present invention.

### DETAILED DESCRIPTION

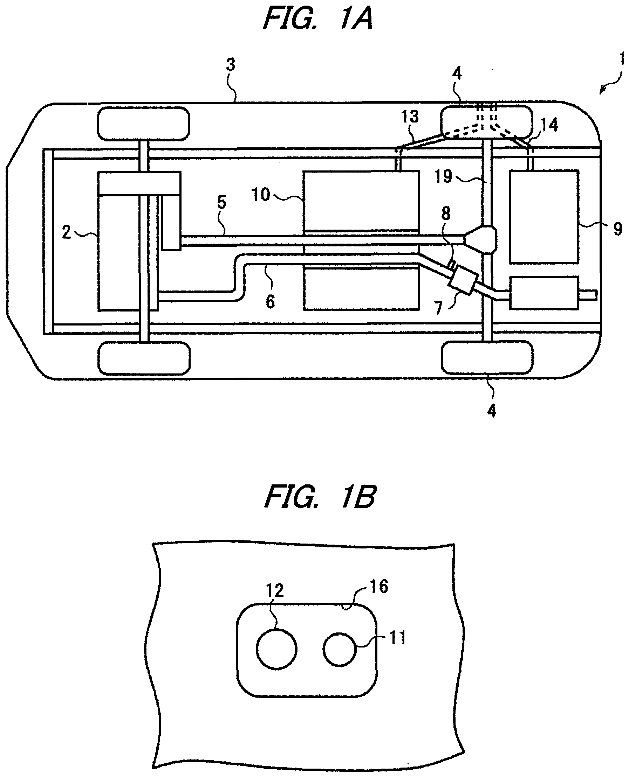

Fig. 1A is a bottom view of a vehicle 1 according to an embodiment of the present invention. The vehicle 1 has a diesel engine 2 provided as a driving source in a front portion of a vehicle body 3. A propeller shaft 5 for transmitting the driving force of the engine 2 to rear wheels 4 of the vehicle is disposed at a central region in the vehicle body 3 with respect to the left-right direction of the vehicle body 3. The driving force of the engine 2 transmitted to the propeller shaft 5 is transmitted to each rear wheel 4 through an axle 19 that connects the rear wheel 4 to each other.

A selective catalytic reduction system as an exhaust gas purifying apparatus for the engine 2 is mounted on the vehicle 1. The selective catalytic reduction system includes a selective reduction catalyst 7 disposed on an exhaust pipe 6 serving as an exhaust passage from the engine 2, and an aqueous urea solution adding unit 8 configured to add aqueous urea solution into the exhaust pipe 6 as reductant and located upstream of the selective reduction catalyst 7 in the exhaust direction. The aqueous urea solution added into the exhaust pipe 6 is distributed into exhaust gas, and hydrolyzed into ammonia and CO2 by heat of the exhaust gas. Then, the ammonia produced in the selective reduction catalyst 7 reacts with NOx in the exhaust gas, and changes chemically into nitrogen and water. The exhaust gas in which NOx has been cleaned is diffused into the atmosphere.

Aqueous urea solution as fluid stored in an aqueous urea solution tank 9 as a fluid tank mounted in the vehicle body 3 is supplied to the aqueous urea solution adding unit 8. The aqueous urea solution tank 9 is disposed below a not-shown trunk located at a rearmost portion of the vehicle body 3 and to the rear of the axle 19 with respect to the front-rear direction of the vehicle. A fuel tank 10 storing diesel fuel as fuel for the engine 2 is disposed below a cabin floor located on the front side of the vehicle body 3 from the rear wheels 4 and to the front of the axle 19 with respect to the front-rear direction of the vehicle.

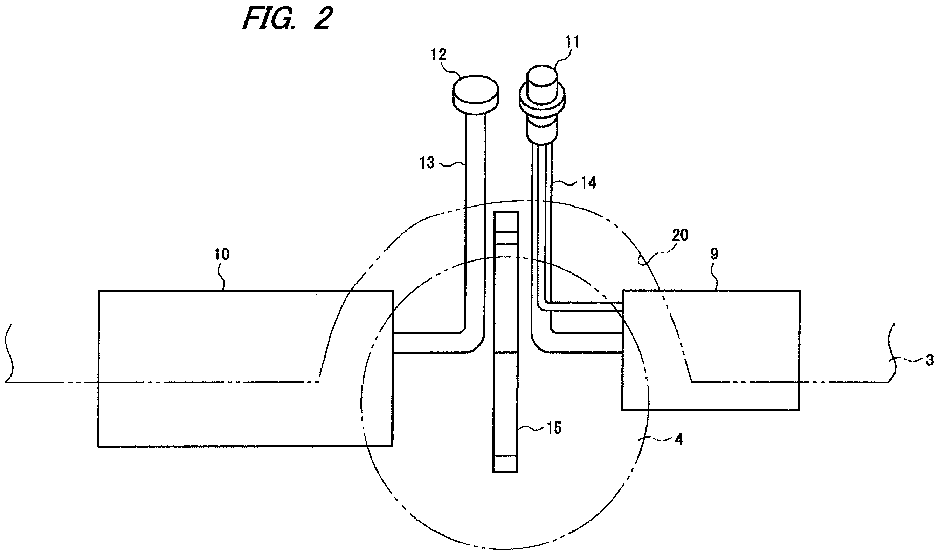

As shown in Fig. 1B, a fluid filler port 11 (a second port) from which aqueous urea solution is supplied to the aqueous urea solution tank 9 and a fuel filler port 12 (a first port) from which the diesel fuel is supplied to the fuel tank 10 are provided next to each other in an opening portion 16 formed on a left side surface of the vehicle body 3 at a location above the rear wheel 4. As shown in Fig. 2, the fluid filler port 11 and the fuel filler port 12 are disposed at a location above a wheel house 20 provide on the vehicle body 3 to form a space for the rear wheel 4 to rotate. As shown in Fig. 2, a fuel pipe 13 connecting the fuel filler port 12 and the fuel tank 10 with each other is disposed between the both, and an aqueous urea solution pipe 14 (a fluid pipe) is disposed between the fluid filler port 11 and the aqueous urea solution tank 9 to connect the fluid filler port 11 and the aqueous urea solution tank 9 to each other. Fig. 2 illustrates a damper 15 of the rear wheel 4 that connects the axle 19 and the vehicle body 3 to each other. The fuel pipe 13 and the aqueous urea solution pipe 14 are disposed such that, interposing the damper 15 in the front-rear direction of the vehicle, the fuel pipe 13 is located to the front of the damper 15 and the aqueous urea solution pipe 14 is located to the rear of the damper 15. Accordingly, the fuel filler port 12 is disposed to the front of the fluid filler port 11 with respect to the front-rear direction of the vehicle 1. Also, the fluid filler port 11 and the fuel filler port 12 are disposed above the upper end portion of the damper 15.

In the configuration described above, an increase in the distance between the fuel filler port 12 and the fluid filler port 11 impedes downsizing of the vehicle 1, and enlarges a lid that covers the fuel filler port 12 and the fluid filler port 11 particularly in the front-rear direction of the vehicle, thereby deteriorating appearance.

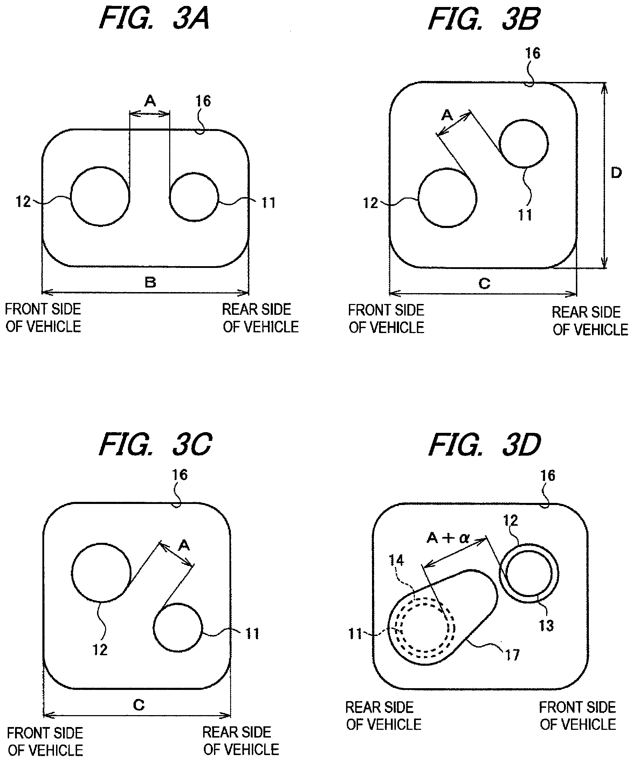

Here, to reduce the width B of the opening portion 16 formed in the vehicle body 3, that is the size of the opening portion 16 in the front-rear direction of the vehicle body 3, while maintaining the minimum distance A required between the fuel filler port 12 and the fluid filler port 11 as shown in Fig. 3A, the fluid filler port 11 may be displaced upward relative to the fuel filler port 12 as shown in Fig. 3B, or the fluid filler port 11 may be displaced downward relative to the fuel filler port 12 as shown in Fig. 3C. In either configuration, the width C of the opening portion 16 can be made smaller than the width B shown in Fig. 3A. Here, the distance between the fuel filler port 12 and the fluid filler port 11 is the distance between the edge of the fuel filler port 12 that is closest to the fluid filler port 11 and the edge of the fluid filler port 11 that is closest to the fuel filler port 12.

However, with the layout shown in Fig. 3C, when a fuel feeding gun is inserted into the fuel filler port 12 to supply fuel, the fuel feeding gun may hit the fluid filler port 11, so that it may be difficult to supply the fuel or cannot supply the fuel. On the other hand, as shown in Fig. 3D viewed on the opposite side to Figs. 3A to 3C, that is, from the inside of the vehicle body 3 toward the outside, a filler neck 13 is connected to the vehicle body inner side of the fuel filler port 12, and a filler neck 14 is connected to the vehicle body inner side of the fluid filler port 11. The filler neck 14 is connected through a holder member 17 in a state in which the holder member 17 is obliquely extends as shown in Fig. 3D. The holder member 17 does not make connection between the filler neck 14 and the filler neck 13. Therefore, with the layout shown in Fig. 3C, the distance between the fuel filler port 12 and the fluid filler port 11 reaches A+α due to the holder member 17. Thus, the height of the opening portion 16 increases.

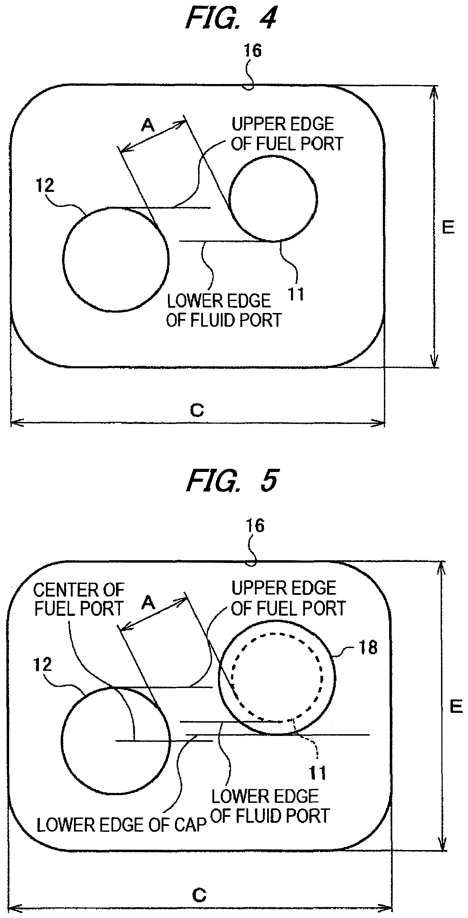

According to a first embodiment of the present invention, as shown in Fig. 4, the upper edge portion of the fuel filler port 12 is disposed, with respect to the vertical direction, above the lower edge portion of the fluid filler port 11 and below the upper edge portion of the fluid filler port 11. Due to this configuration, a height size E of the opening portion 16 can be suppressed to be small while keeping the width C of the opening portion 16. The area of the opening portion 16 is reduced without impeding fuel supply, so that appearance can be improved without impeding downsizing of the vehicle.

Fig. 5 illustrates a second embodiment of the present invention. According to the second embodiment, the fluid filler port 11 is covered with a cap 18. With the cap 18 covering the fluid filler port 11, the fuel feeding gun may hit the cap 18 during the fuel supply. To prevent such interference, the fuel filler port 12 and the fluid filler port 11 are arranged such that, with respect to the vertical direction, the lower edge portion of the cap 18 is located above the center of the fuel filler port 12. Due to this configuration, the same or similar advantages as the first embodiment can be obtained even when the cap 18 is attached to the fluid filler port 11.

In the embodiments described above, the fuel filler port 12 and the fluid filler port 11 are provided on the same plane with respect to a direction perpendicular to the drawing sheets of Figs. 4 and 5. As a result, the fluid filler port 11 does not interfere with the fuel supply operation and the fuel filler port 12 does not interfere with the fluid supply operation.

In addition, the fuel filler port 12 and the fluid filler port 11 are disposed on the front side and the rear side in the traveling direction of the vehicle respectively in the embodiments described above. The fuel tank 10 and the aqueous urea solution tank 9 are disposed in places close to the ports respectively. Thus, external force acting on the fuel tank 10 can be reduced to prevent damage on the fuel tank 10 when the vehicle is hit by another vehicle at the rear of the vehicle body 3.

In addition, the fuel pipe 13 and the aqueous urea solution pipe 14 are disposed to interpose the damper 15 therebetween. As a result, the fuel pipe 13 and the aqueous urea solution pipe 14 can be arranged without impeding the behaviors of the damper 15 and the rear wheel 4. Thus, the layout of the damper 15, the fuel pipe 13 and the aqueous urea solution pipe 14 can be improved.

While the present invention has been described with reference to certain embodiments thereof, the present invention is not limited to the embodiments described above, and it will be understood that various changes and modifications may be made therein without departing from the scope of the present invention as defined by the appended claims. For example, the second port 11 is not limited to the fluid port 11 for supplying the aqueous urea solution to the vehicle, and may be a port provided to supply fluid other than the fuel to the vehicle. Further, the shape of each of the first port and the second port is not limited to a true circle, and may be another shape such as oval or ellipse. The effects described in connection with the embodiments above are merely examples of effects resulting from the present invention, and effects of the present invention are not limited to those described above in connection with the embodiments.

## Claims

1. A vehicle (1) comprising a first port (12) from which fuel is supplied to the vehicle (1), a second port (11) from which fluid other than the fuel is supplied to the vehicle (1), and a vehicle body (3) on which the first port (12) and the second port (11) are provided,
**characterized in that**, with respect to a vertical direction of the vehicle (1), an upper edge portion of the first port (12) is disposed above a lower edge portion of the second port (11) and below an upper edge portion of the second port (11).

2. The vehicle (1) according to claim 1, further comprising a cap (18) provided on the second port (11), wherein, with respect to the vertical direction, a lower edge portion of the cap (18) is disposed above a center of the first port (12).

3. The vehicle (1) according to claim 1 or 2, wherein, with respect to a front-rear direction of the vehicle (1), the first port (12) is disposed to the front of the second port (11).

4. The vehicle (1) according to any one of claims 1 to 3, wherein the first port (12) and the second port (11) are disposed on the same plane.

5. The vehicle (1) according to any one of claims 1 to 4, further comprising:
wheel houses (20) provided on right and left of the vehicle body (3) to form spaces for wheels to rotate;
an axle (19) extending in a width direction of the vehicle body (3) to connect the wheels to each other;
a damper (15) connecting the axle (19) and the vehicle body (3) to each other;
a fuel tank (10) configured to store the fuel;
a fuel pipe (13) connecting the fuel tank (10) and the first fuel port (12) to each other;
a fluid tank (9) configured to store the fluid; and
a fluid pipe (14) connecting the fluid tank (9) and the second port (11) to each other,
wherein, with respect to the front-rear direction of the vehicle (1), the fuel tank (10) is disposed to the front of the axle (19) and the fluid tank (9) is disposed to the rear of the axle (19),
wherein, with respect to the front-rear direction of the vehicle (1), the damper (15) is disposed between the fuel pipe (13) and the fluid pipe (14), and
wherein the first port (12) and the second port (11) are disposed above the wheel houses (20) and above an upper end portion of the damper (15).
